# EUROPEAN PATENT APPLICATION

(11) **EP 4 776 408 A1**
(43) Date of publication of application: **15.07.2026**
(21) Application number: 25867229.4
(22) Date of filing: 27.06.2025
(51) Int. Cl.: H01M 50/244, H01M 10/04, H01M 50/258, H01M 50/383, H01M 50/367, H01M 50/271

(54) **BATTERY MODULE AND BATTERY PACK INCLUDING SAME**

(30) Priority: 08.11.2024 KR 20240157780
(71) Applicant: LG ENERGY SOLUTION, LTD., Seoul 07335 (KR)
(72) Inventor: JEON, Bora, Daejeon 34122 (KR); PARK, Hyungkeun, Daejeon 34122 (KR); SHIN, Jinhwan, Daejeon 34122 (KR)
(74) Representative: Plasseraud IP
(86) International application number: PCT/KR2025/009123
(87) International publication number: WO 2026/100880

(57) **Abstract**

A battery module including a module case, the module case being configured to accommodate a battery cell stack, an end plate located on a side of the module case, an insulating cover located on an inner side of the end plate, and a plurality of fastening portions, each fastening portion including a fastening projection protruding from the insulating cover and a projection fastening hole located in the end plate, the fastening projection being inserted and fastened to the projection fastening hole, the fastening portions being configured to fasten the end plate and the insulating cover, wherein the fastening portions are arranged at positions asymmetrical to each other in a left-right direction.

## Description

### [Technical Field]

The present disclosure relates to a battery module and a battery pack including the same, and more specifically, to a battery module and a battery pack including the same, in which venting gas is smoothly discharged upward when discharged through a fastening portion between an end plate and an insulating cover, and a thermal propagation issue is suppressed.

### [Background Art]

Secondary batteries refer to rechargeable and dischargeable batteries, unlike non-rechargeable primary batteries, and are used in a variety of applications, including not only portable devices but also electric vehicles (EVs), hybrid electric vehicles (HEVs), and the like.

Currently widely used secondary batteries include lithium-ion batteries, lithium polymer batteries, nickel-cadmium batteries, nickel-metal hydride batteries, nickel-zinc batteries, and the like. An operating voltage of such a unit secondary battery cell (i.e., a unit battery cell) is about 2.5 V to 4.6 V. When a higher output voltage is required, a plurality of battery cells may be connected in series to configure a battery pack. In addition, a plurality of battery cells may be connected in parallel to configure a battery pack according to the charge/discharge capacity required for a battery pack. The number of battery cells configuring the battery pack may be set variously according to the required output voltage or charge/discharge capacity.

When configuring a battery pack by connecting a plurality of battery cells in series or in parallel, it is common to first configure a battery module including the battery cells, and then configure a battery pack including the battery module. Here, the battery module refers to a component in which a plurality of battery cells are connected in series or in parallel, and the battery pack refers to a component in which a plurality of battery modules are connected in series or in parallel to increase a capacity, an output, and the like.

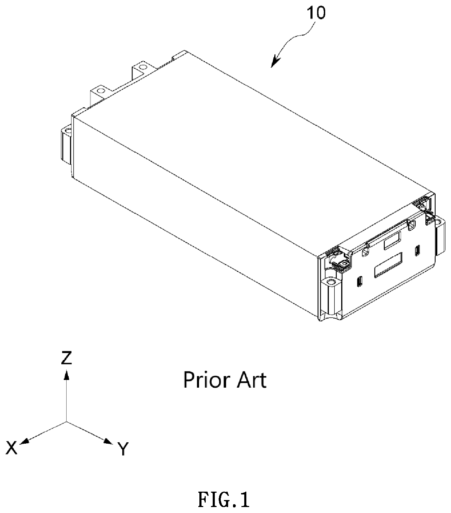

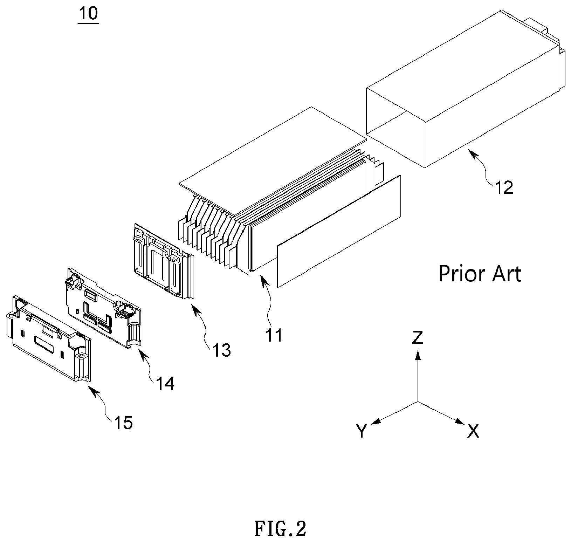

As illustrated in FIG. 1 and FIG. 2, a battery module 10 may include a battery cell stack 11, a module case 12, bus bar frames 13, insulating covers 14, and end plates 15.

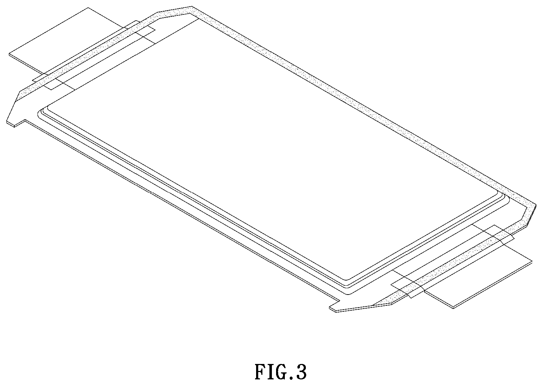

The battery cell stack 11 includes a plurality of electrically connected battery cells stacked along one direction and is housed in the module case 12. The battery cell may be a pouch type as illustrated in FIG. 3.

The module case 12 accommodates the battery cell stack 11 inside. The end plates 15 are coupled to front and rear surfaces of the module case 12 to cover the front and rear surfaces of the module case 12.

The bus bar frame 13 is located on one side of the battery cell stack 11, and may cover one side of the battery cell stack 11 while guiding connection between the battery cell stack 11 and an external device.

The insulating cover 14 may include an electrical insulating material and may block a bus bar of the bus bar frame 13 from coming into contact with the end plate 15.

The end plate 15 may protect the battery cell stack 11 and electrical components connected thereto from external physical impact by sealing an open surface of the module case 12.

Note that a battery module or a battery pack is inherently vulnerable to thermal events because a plurality of battery cells or a plurality of battery modules are densely packed in a space-efficient manner. In particular, when thermal runaway (TR) or the like occurs inside a battery module, high-temperature gas, flame, heat, and the like are generated, and if these are not promptly controlled, thermal propagation (TP) may cause a chain reaction of fire or explosion not only in the battery module but also in adjacent battery modules.

In a battery module having the configuration described above, the insulating cover and the end plate are fastened through a fastening portion composed of a fastening projection and a fastening hole. Therefore, when a large amount of venting gas is generated due to a thermal event in the module case, the venting gas may be discharged to the outside of the module case through the fastening portion.

In battery modules of the related art, the fastening portions are located at the center of the end plate. Specifically, the fastening holes that make up the fastening portion are located on an imaginary horizontal line passing through the center of the end plate in the left-right direction.

As described above, the battery modules are accommodated in the battery pack and are connected in series or in parallel, so that the venting gas does not smoothly move toward the lower portion or sides of the module. Therefore, it is preferable to move the venting gas to the upper portion of the module and then discharge it to the outside through the upper portion of the battery pack.

However, when the fastening portion including the fastening hole is located at the center of the end plate as in the battery module of the related art, the venting gas discharged through the fastening portion is ejected toward the center of the adjacent battery module, which hinders the smooth movement of the venting gas toward the upper portion of the module. In addition, when the battery modules are aligned facing each other in the battery pack, the positions of the fastening portions of the two opposing battery modules coincide with each other. Accordingly, the venting gas discharged from one battery module may be ejected to the fastening portion of the opposite battery module, which may cause the fastening portion to melt and allow the venting gas to flow into the other battery module, thereby spreading thermal propagation.

### [Disclosure]

### [Technical Problem]

The present disclosure has been made to solve the problems of the related art as described above, and an object of the present disclosure is to provide a battery module and a battery pack including the same, which enable a smooth discharge flow of venting gas toward an upper portion of a battery module when the venting gas is discharged through a fastening portion and can prevent thermal propagation from spreading to other battery modules.

### [Technical Solution]

To achieve the above object, a battery module according to an exemplary embodiment of the present disclosure includes a module case, the module case being configured to accommodate a battery cell stack, an end plate located on a side of the module case, an insulating cover located on an inner side if the end plate, and a plurality of fastening portions, each fastening portion including a fastening projection protruding from the insulating cover, and a projection fastening hole located in the end plate, the fastening projection being inserted and fastened to the projection fastening hole, the fastening portions being configured to fasten the end plate and the insulating cover, wherein the fastening portions are located at positions asymmetrical to each other in a left-right direction.

At least one of the fastening portions is located above an imaginary horizontal line passing through a center of the end plate.

The fastening projections are hooks.

The fastening portions are located on first and second sides of an imaginary vertical line passing through the center of the end plate, respectively, and the fastening portion on on the first side is located above the imaginary horizontal line, and the fastening portion on the second side is located below the imaginary horizontal line.

The fastening portion on the first side and the fastening portion on the second side are located at equal distances with respect to the imaginary horizontal line and the imaginary vertical line.

The end plate is made of metal and the fastening projections are made of plastic.

To achieve the above object, a battery pack according to an exemplary embodiment of the present disclosure includes one or more battery modulus, each battery module including a module case configured to accommodate a battery cell stack, an end plate located on a side of the module case, an insulating cover located on an inner side of the end plate, and a a plurality of fastening portions, each fastening portion being configured to fasten the end plate and the insulating cover, and a pack case configured to accommodate the one or more battery modules, wherein each fastening portion includes a fastening projection protruding from the insulating and a projection fastening hole flocated in the end plate, the fastening projection being inserted and fastened to the projection fastening hole, wherein the fastening portions are located at positions asymmetrical to each other in a left-right direction.

The battery module is provided in plurality and the battery modules are located in series or in parallel in the pack case.
each battery module is located such that the end plate faces the end plate of an adjacent battery module, and locations of the fastening portions on the two facing battery modules are offset.

The battery pack according to the present disclosure further includes a venting gas discharge portion located on an upper portion of the pack case.

The pack case includes a pack housing, the pack housing having an open upper portion and being configured to accommodate the battery modules, and a pack cover, the pack cover being configured to cover the open upper portion of the pack housing and having the venting gas discharge portion.

### [Advantageous Effects]

According to the battery module and the battery pack including the same of the present disclosure, the venting gas discharged from the battery module is smoothly discharged to the outside of the battery pack through the upper portion of the battery module, thereby preventing the spread of thermal propagation caused by a delay in discharge of the venting gas.

In particular, in the configuration in which the battery modules are arranged facing each other in the battery pack, if the positions of the fastening portions formed on the opposing battery modules are different, the venting gas discharged through the fastening portion of the battery module is not ejected toward the fastening portion of the opposite battery module but is ejected toward the end plate. Accordingly, the venting gas can smoothly flow toward the upper portion of the battery module and the thermal propagation can be prevented from spreading to other battery modules.

That is, when the battery modules face each other and the positions of the fastening portions are different, there is no concern that the venting gas discharged from the battery module will melt the fastening portion of the opposite battery module. Accordingly, there is no concern that the venting gas will flow into the opposite battery module through the fastening portion of the opposite battery module.

In addition, since some of the fastening portions are arranged above the imaginary horizontal line passing through the center of the end plate, the venting gas discharged through the fastening portions arranged above the imaginary horizontal line can smoothly flow toward the upper portion of the battery module.

### [Description of Drawings]

FIG. 1 is a perspective view of a battery module of the prior art.
FIG. 2 is an exploded perspective view of FIG. 1.
FIG. 3 is a perspective view of a battery cell illustrated in FIG. 2.
FIG. 4 is a perspective view of a battery module according to a preferred exemplary embodiment of the present disclosure.
FIG. 5 is an exploded perspective view of an insulating cover and an end plate constituting the battery module according to a preferred exemplary embodiment of the present disclosure.
FIG. 6 is a side view of FIG. 4.
FIG. 7 is a partially cut perspective view of a fastening structure between the insulating cover and the end plate.
FIG. 8 is a perspective view illustrating battery modules accommodated in a pack housing of a battery pack according to a preferred exemplary embodiment of the present disclosure.
FIG. 9 is a cross-sectional view schematically illustrating a state in which venting gas is discharged from the battery pack according to a preferred exemplary embodiment of the present disclosure.
FIG. 10 is a view illustrating a state in which venting gas discharged from one battery module is ejected toward an opposite battery module.

### [Best Mode]

Hereinafter, a battery module and a battery pack including the same according to a preferred exemplary embodiment of the present disclosure will be described in detail with reference to the accompanying drawings.

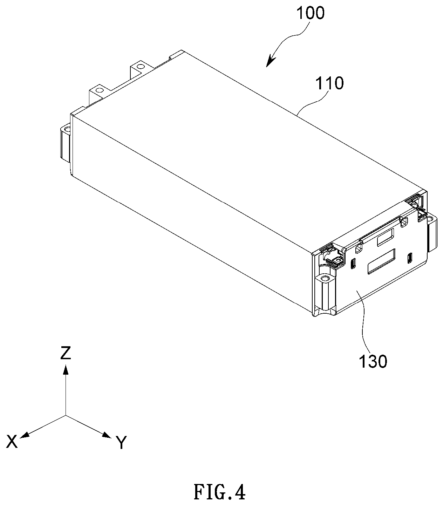

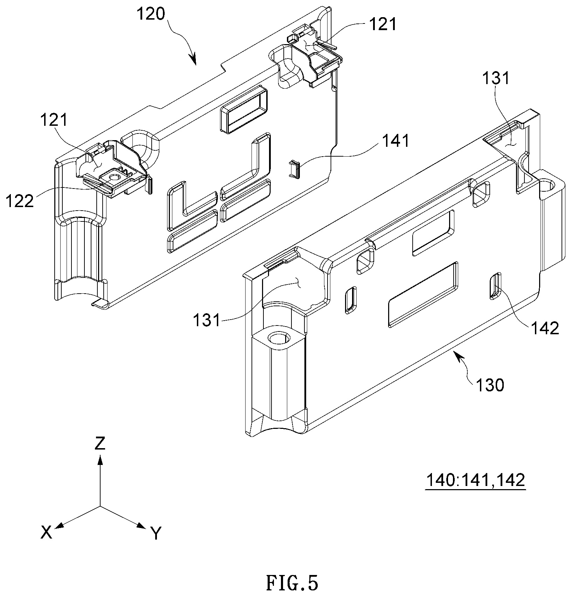

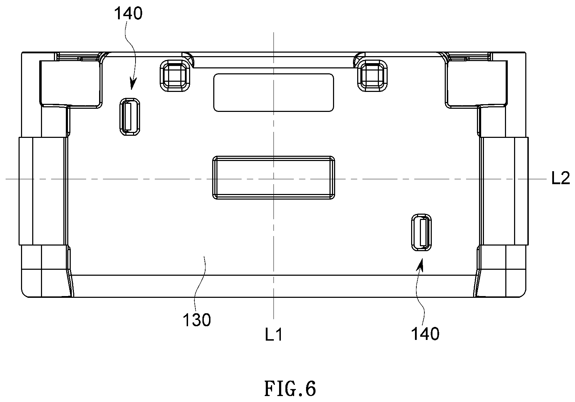

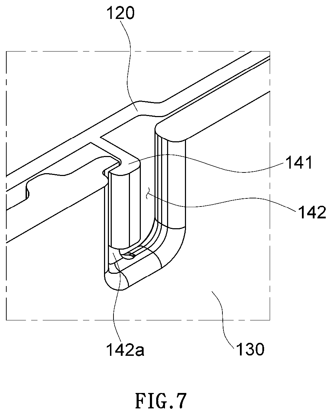

FIG. 4 is a perspective view of a battery module according to a preferred exemplary embodiment of the present disclosure, FIG. 5 is an exploded perspective view of an insulating cover and an end plate constituting the battery module according to a preferred exemplary embodiment of the present disclosure, FIG. 6 is a side view of FIG. 4, and FIG. 7 is a partially cut perspective view of a fastening structure between the insulating cover and the end plate.

A battery module 100 according to a preferred exemplary embodiment of the present disclosure includes a module case 110, an insulating cover 120, an end plate 130, and a fastening portion 140.

The module case 110 can safely protect a battery cell stack and electrical components connected thereto from external physical impact by accommodating the battery cell stack and the electrical components connected thereto in an internal space.

The structure of the module case 110 may be implemented in various ways. For example, the module case 110 may have a monoframe structure. The monoframe may have a form in which an upper surface, a lower surface, and both side surfaces are integrated, and may be manufactured by extrusion molding using a metal material. As another example, the module case 110 may have a structure in which a U-shaped frame and an upper plate are coupled. That is, the module case may have a structure in which a flat plate-type upper plate is coupled to upper sides of a U-shaped frame made of metal in which a lower surface and both side surfaces are coupled or integrated. The U-shaped frame and the upper plate may be manufactured by press forming. In addition, the module case 110 may be modified into various structures, such as an L-shaped frame structure.

The insulating cover 120 may be positioned between a bus bar frame and the end plate 130 for electrical insulation between the bus bar frame and the end plate 130. That is, the bus bar frame, the insulating cover 120, and the end plate 130 may be sequentially positioned from the battery cell stack toward the outside. As with the end plate 130, the bus bar frame and the insulating cover 120 may each be configured in plurality.

The insulating cover 120 may include an electrical insulating material and may block a bus bar from coming into contact with the end plate 130. The insulating cover 120 may include an opening portion 121 and a seating portion 122. The opening portion 121 can be arranged on each of both sides of an upper portion of the insulating cover 120, and one end portion of a terminal bus bar may be exposed through the opening portion 121. A connector opening portion may be positioned between the opening portions 121 positioned on both sides of the insulating cover 120, and a module connector may be exposed to the outside through the connector opening portion.

The insulating cover 120 may be positioned on an inner surface of the end plate 130, and may be in close contact with the inner surface of the end plate 130. However, no such limitation is intended. The insulating cover 120 may be made of a plastic material.

The end plate 130 protects the battery cell stack and electrical components connected thereto from external physical impact by sealing an open surface of the module case 110. To this end, the end plate 130 may be made of a metal material such as aluminum having a predetermined strength. The material of the end plate 130 is not limited to metal, and a heat-resistant synthetic resin material may also be used. In the present exemplary embodiment, a case is described in which the end plate 130 is made of a metal material.

Terminal opening portions 131 may be formed in the end plate 130. The terminal opening portions 131 may be arranged on both sides of the end plate 130, respectively. A part of the insulating cover 120 and one end portion of a terminal bus bar may be exposed through the terminal opening portion 131. A connector opening portion may be positioned between the terminal opening portions 131 arranged on both sides of the end plate 130, and a module connector may be exposed to the outside through the connector opening portion.

The end plate 130 may be coupled to the module case 110 while covering the bus bar frame or bus bars located on one surface of the battery cell stack 100. Each corner of the end plate 130 may be coupled to a corresponding corner of the module case 110 by welding, bolting, hooking, or the like.

The fastening portion 140 is configured to fasten the insulating cover 120 and the end plate 130, and includes a fastening projection 141 protruding from one surface of the insulating cover 120, and a projection fastening hole 142 formed in the end plate 130, into which the fastening projection 141 is inserted and fastened. Here, the fastening projection 141 is formed integrally with the insulating cover 120 and is made of a plastic material, so it is relatively weak to heat compared to the end plate 130 made of a metal material.

The fastening portion 140 is provided in two, with one arranged on each side of an imaginary vertical line L1 passing through the center of the end plate 130. The fastening portion 140 on one side may be arranged above an imaginary horizontal line L2 passing through the center of the end plate 130 in the left-right direction, and the fastening portion 140 on the other side may be arranged below the imaginary horizontal line L2. The fastening portion 140 on one side and the fastening portion 140 on the other side are positioned at equal distances with respect to the imaginary horizontal line L2 and the imaginary vertical line L1 passing through the center of the end plate 130, so that the fastening between the insulating cover 120 and the end plate 130 can be stably maintained.

The fastening projection 141 is formed in the form of hook, such that its end portion is hooked on an edge of the projection fastening hole 142 in a state in which the fastening projection 141 passes through the projection fastening hole 142 of the end plate 130. A hooking ledge 142a is formed at a portion of the edge of the projection fastening hole 142, on which the end portion of the fastening projection 141 is hooked, in order to maintain the hooked state.

The fastening portions 140 may be provided in only two, one on each side as illustrated in the drawings, or may be provided in a greater number. Even in this case, the fastening portions 140 are preferably arranged above and below the imaginary horizontal line L2 rather than at the center of the end plate 130, respectively.

Specifically, for stable fastening between the insulating cover 120 and the end plate 130, the fastening portions 140 may be provided in the same number on both the left and right sides of the end plate 130, and may be arranged in pairs, one on each of the left and right sides, at equal distances with respect to an imaginary horizontal line and an imaginary vertical line passing through the center of the end plate 130.

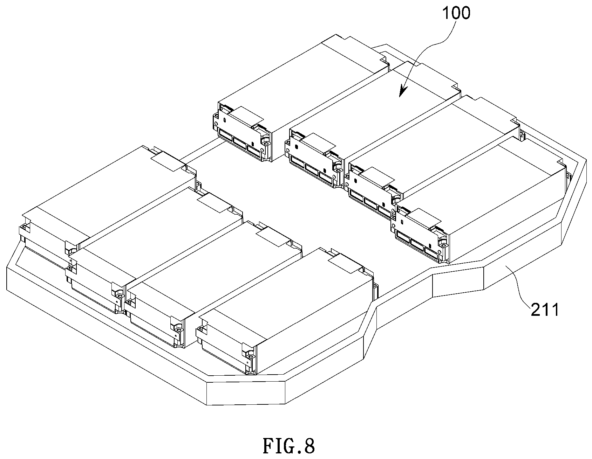

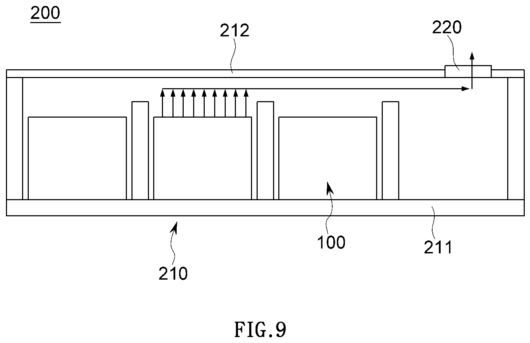

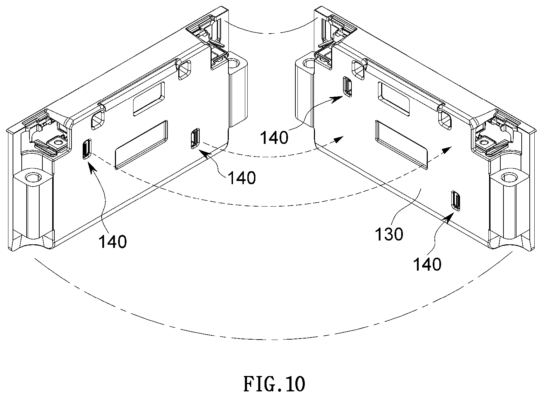

FIG. 8 is a perspective view illustrating battery modules accommodated in a pack housing of a battery pack according to a preferred exemplary embodiment of the present disclosure, FIG. 9 is a cross-sectional view schematically illustrating a state in which venting gas is discharged from the battery pack according to a preferred exemplary embodiment of the present disclosure, and FIG. 10 is a view illustrating a state in which venting gas discharged from one battery module is ejected toward an opposite battery module.

The battery pack 200 includes a pack case 210, the battery module 100, and a venting gas discharge portion 220.

The pack case 210 accommodates a plurality of battery modules 100 inside, and may include a pack housing 211 having an open upper portion and configured to accommodate the battery modules 100 therein, and a pack cover 212 configured to cover the open upper portion of the pack housing 211 and having the venting gas discharge portion 220.

Both the pack housing 211 and the pack cover 212 may be formed in a U shape, or the pack housing 211 may be formed in a U shape and the pack cover 212 may be formed in a flat plate shape.

The battery module 100 may be provided in plurality, and the plurality of battery modules 100 may be arranged in series or in parallel in the pack case 210. FIG. 8 illustrates an example in which the battery modules 100 are arranged in two rows in parallel. As illustrated in FIG. 8, the battery modules 100 may be arranged in the left and right rows with the same number and spacing, and the battery modules arranged in the left row and the battery modules arranged in the right row may be arranged to face each other. Two battery modules 100 facing each other may be arranged such that their end plates 130 face each other.

The venting gas discharge portion 220 may be provided on an upper surface of the pack case 210, i.e., on the pack cover 212. The battery modules 100 are accommodated in the battery pack 200 and are connected in series or in parallel, so that the venting gas does not smoothly move toward the lower portion or sides of the battery module. Therefore, it is preferable to move the venting gas to the upper portion of the battery module 100 and then discharge it to the outside through the upper portion of the battery pack 200. Accordingly, it is preferable to arrange the venting gas discharge portion 220 on the upper portion of the pack case 210 as described above.

In order to allow upward movement of the venting gas discharged from the battery module 100, in the battery module 100 according to the present disclosure, the position of the fastening portion 140, which serves as a discharge passage for the venting gas, is changed from the configuration of the related art such that the venting gas discharged through the fastening portion 140 can smoothly flow toward the upper portion of the battery module 100.

That is, in the related art, since the fastening portion 140 is located at the center of the end plate 130, the venting gas discharged through the fastening portion 140 is entirely ejected toward the opposite battery module 100, which hinders the flow, making it difficult for the venting gas to smoothly flow toward the upper portion of the battery module 100. In addition, since the venting gas ejected from the battery module 100 is ejected toward the fastening projection 141 made of a plastic material rather than the end plate 130 made of a metal material, the fastening projection 141 melts, causing the venting gas to flow into the opposite battery module 100, thereby hindering the smooth flow toward the upper portion of the battery module 100.

However, according to the present disclosure, the arrangement of the fastening portions 140 respectively arranged on the left and right sides of the end plate 130 is such that the fastening portion 140 on one side is arranged above the center of the end plate 130 and the fastening portion 140 on the other side is arranged below the center of the end plate 130. Accordingly, the venting gas discharged from the fastening portion 140 on the other side of the fastening portions 140 may be hindered in its flow by the opposite battery module 100, but the venting gas discharged from the fastening portion 140 on one side may be less hindered by the opposite battery module 100 and may smoothly move toward the upper portion of the battery module 100. Accordingly, compared to the related art, the venting gas can smoothly flow toward the upper portion of the battery module 100 in the battery pack 200, so that the venting gas can be smoothly discharged to the outside of the battery pack 200.

In addition, when the battery modules 100 are arranged to face each other in the battery pack 200 as described above, if the positions of the left fastening portion 140 and the right fastening portion 140 are made different as described above, the positions of the fastening portions 140 of the opposing battery modules 100 are not aligned with each other but are offset.

Therefore, when the venting gas is discharged from the battery module 100 on one side (refer to an arrow direction of FIG. 10), the venting gas is not directly ejected to the fastening projection 141 of the opposite battery module 100 but is ejected to the end plate 130 made of a metal material, which prevents the fastening projection 141 from melting. With this, the venting gas ejected from the battery module 100 on one side does not flow into the opposite battery module 100, so the venting gas flow can be smoothly guided toward the upper portion of the battery module 100, and the spread of thermal propagation that may occur when the venting gas flows into the opposite battery module 100 can be prevented.

As described above, in the present disclosure, the positions of the fastening portions 140 are offset with respect to the imaginary horizontal line L2 and the imaginary vertical line L1 passing through the center of the end plate 130, and some of the fastening portions are positioned above the imaginary horizontal line L2, so that the venting gas discharged from the battery module 100 can be smoothly discharged to the outside of the battery pack 200 through the upper portion of the battery module 100. This makes it possible to prevent the spread of thermal propagation that may occur due to the delayed discharge of the venting gas and the inflow of part of the venting gas into another battery module 100.

Although the battery module and the battery pack including the same according to the preferred exemplary embodiments of the present disclosure have been described in detail with reference to the accompanying drawings, the present disclosure is not limited to the above-described exemplary embodiments and may be implemented in various modified forms within the scope of the claims.

### [Description of Main Reference Numerals of Drawings]

10: Battery module 11: Battery cell stack
12: Module case 13: Bus bar frame
14: Insulating cover 15: End plate
100: Battery module 110: Module case
120: Insulating cover 121: Opening portion
122: Seating portion 130: End plate
131: Terminal opening portion 140: Fastening portion
141: Fastening projection 142: Projection fastening hole
200: Battery pack 210: Pack case
211: Pack housing 212: Pack cover
220: Venting gas discharge portion L1: Imaginary vertical line
L2: Imaginary horizontal line

## Claims

1. A battery module comprising:
a module case, the module case being configured to accommodate a battery cell stack;
an end plate located on a side of the module case;
an insulating cover located on an inner side of the end plate; and
a plurality of fastening portions, each fastening portion including a fastening projection protruding from the insulating cover and a projection fastening hole located in the end plate, the fastening projection being inserted and fastened to the projection fastening hole, the fastening portions being configured to fasten the end plate and the insulating cover,
wherein the fastening portions are located at positions asymmetrical to each other in a left-right direction.

2. The battery module of claim 1, wherein at least one of the fastening portions is located above an imaginary horizontal line passing through a center of the end plate.

3. The battery module of claim 1, wherein the fastening projections are hooks.

4. The battery module of claim 2, wherein the fastening portions are located on first and second sides of an imaginary vertical line passing through the center of the end plate, respectively, and the fastening portion on the first side is located above the imaginary horizontal line, and the fastening portion on the second side is located below the imaginary horizontal line.

5. The battery module of claim 4, wherein the fastening portion on the first side and the fastening portion on the second side are located at equal distances with respect to the imaginary horizontal line and the imaginary vertical line.

6. The battery module of claim 1, wherein the end plate is made of metal and the fastening projections are made of plastic.

7. A battery pack comprising:
one or more battery modules, each battery module including:
a module case configured to accommodate a battery cell stack;
an end plate located on a side of the module case;
an insulating cover located on an inner side of the end plate; and
a plurality of fastening portions, each fastening portion being configured to fasten the end plate and the insulating cover; and
a pack case configured to accommodate the one or more battery modules, wherein each fastening portion includes a fastening projection protruding from the insulating cover and a projection fastening hole located in the end plate, the fastening projection being inserted and fastened to the projection fastening hole;
wherein the fastening portions are located at positions asymmetrical to each other in a left-right direction.

8. The battery pack of claim 7, wherein at least one of the fastening portions is located above an imaginary horizontal line passing through a center of the end plate.

9. The battery pack of claim 8, wherein the fastening portions are located on first and second sides of an imaginary vertical line passing through the center of the end plate, respectively, and the fastening portion on the first side is located above the imaginary horizontal line, and the fastening portion on the second side is located below the imaginary horizontal line.

10. The battery pack of claim 7, wherein the one or more battery modules is provided in plurality and the battery modules are located in series or in parallel in the pack case.

11. The battery pack of claim 10, wherein each battery module is located such that the end plate faces the end plate of an adjacent battery module, and locations of the fastening portions on the two facing battery modules are offset.

12. The battery pack of claim 7, further comprising a venting gas discharge portion located on an upper portion of the pack case.

13. The battery pack of claim 12, wherein the pack case comprises:
a pack housing, the pack housing having an open upper portion and being configured to accommodate the battery modules; and
a pack cover, the pack cover being configured to cover the open upper portion of the pack housing and having the venting gas discharge portion.
